# EUROPEAN PATENT SPECIFICATION

(11) **EP 1 401 278 B1**
(45) Date of publication and mention of the grant of the patent: **28.09.2005**
(21) Application number: 02740217.1
(22) Date of filing: 02.07.2002
(51) Int. Cl.: A01N 45/00

(54) **THE USE OF 2-ALPHA, 3-ALPHA, 17-BETA-TRIHYDROXY-5-ALPHA-ANDROSTAN-6-ONE FOR PLANT DEVELOPMENT BY DECREASNG PLANT STRESS.**
VERWENDUNG VON 2-ALPHA, 3-ALPHA, 17-BETA-TRIHYDROXY-5-ALPHA-ANDROSTAN-6-ON ZUR REGULIERUNG DER ENTWICKLUNG VON PFLANZEN durch Verminderung von Stress der Pflanzen.
UTILISATION DE LA 2-ALPHA, 3-ALPHA, 17-BETA-TRIHYDROXY-5-ALPHA-ANDROSTAN-6-ONE POUR REGULER LE DEVELOPPEMENT DES PLANTES EN DIMINUANT leurs contraintes.

(30) Priority: 02.07.2001 CZ 24360001; 08.08.2001 CZ 28690001
(43) Date of publication of application: 31.03.2004
(73) Proprietor: Ustav Organicke Chemie A Biochemie Akademie Ved Ceske Republiky, 166 10 Praha 6 (CZ)
(72) Inventor: KOHOUT, Ladislav, 163 00 Praha 6 (CZ); KASAL, Alexander, 101 00 Praha 10 (CZ); CHODOUNSKA, HANA, 160 00 Praha 6 (CZ); SLAVIKOVA, Barbora, 252 28 Cernosice (CZ); HNILICKOVA, Jaroslava, 182 00 Praha 8 (CZ)
(74) Representative: Herman, Vaclav
(86) International application number: PCT/CZ2002/000041
(87) International publication number: WO 2003/003834

(56) References cited:
- DATABASE WPI Section Ch, Week 199933, Derwent Publications Ltd., London, GB; Class C03, AN 1999-386399, XP002220812 & CZ 9 703 975 A3 (USTAV ORGANICKE CHEM A BIOCHEMIE) 16 June 1999 -& "Patent application number CZ 1997-3975" CZECH INDUSTRIAL PROPERTY OFFICE, PATENT AND UTILITY MODEL REGISTER REPORT , [Online] XP002220855 Retrieved from the Internet: <URL:http://wdb.upv.cz/rs/pt.ptdet?&xprim= 2095383&lan=en> [retrieved on 2002-11-12]
- DATABASE CA [Online] CHEMICAL ABSTRACTS SERVICE, COLUMBUS, OHIO, US; KOHOUT, LADISLAV ET AL: "The brassinolide phytohormone 2.alpha.,3.alpha.,17.beta.-trihydroxy- 5.alpha.-androstan-6-one and a method for its preparation" retrieved from STN Database accession no. 111:134642 CA XP002220856 & CS 252 605 B1 (CZECH.) 17 September 1987
- DATABASE WPI Section Ch, Week 198947 Derwent Publications Ltd., London, GB; Class A97, AN 1989-345117 XP002220859 & JP 01 258604 A (TEIJIN LTD), 16 October 1989 (1989-10-16) -& US 5 071 466 A (KURAISHI SUSUMU ET AL.) 10 December 1991 (1991-12-10)
- DATABASE CA [Online] CHEMICAL ABSTRACTS SERVICE, COLUMBUS, OHIO, US; SAKAI, SHINICHI ET AL: "Plant growth-regulating compositions containing brassinosteroids and poly(oxyethylene) sorbitan fatty acid esters" retrieved from STN Database accession no. 113:206731 CA XP002220857 & JP 02 209801 A (NIPPON KAYAKU CO., LTD., JAPAN) 21 August 1990 (1990-08-21) -& PATENT ABSTRACTS OF JAPAN vol. 014, no. 505 (C-0775), 5 November 1990 (1990-11-05) & JP 02 209801 A
- GAUDINOVA A ET AL: "Different effects of two brassinosteroids on growth, auxin and cytokinin content in tobacco callus tissue." PLANT GROWTH REGULATION, vol. 17, no. 2, 1995, pages 121-126, XP008010568 ISSN: 0167-6903
- KOHOUT, LADISLAV ET AL: "Steroids. Part CCCXXVIII. Brassinosteroids with androstane and pregnane skeleton" COLLECTION OF CZECHOSLOVAK CHEMICAL COMMUNICATIONS (1987), 52(2), 476-86 , 1987, XP002220898
- DATABASE CA [Online] CHEMICAL ABSTRACTS SERVICE, COLUMBUS, OHIO, US; KOHOUT, LADISLAV ET AL: "Preparation of brassinosteroids" retrieved from STN Database accession no. 126:157697 CA XP002220858 & CZ 281 040 B6 (USTAV ORGANICKE CHEMIE A BIOCHEMIE AVCR, CZECH REP.) 12 June 1996

## Description

### Technical Field

Present invention refers to the use of 2α,3α,17β-trihydroxy-5α-androstan--6-one for plant development regulation by decreasing plant stress, specifically, it relates to the use for influencing plant growth in their development stages by decreasing any stress, which influences plants in their environment.

### Background Art

Various plant hormones and their mixtures are used to regulate plant development. In the last years great attention has been devoted to brassinosteroids, which are analogues of natural plant hormone brassinolide, (22R,23R,24S)--2α,3α,22,23-tetrahydroxy-24-methyl-7a-homo-7-oxa-5α-cholestan-6-one.

This compound can be isolated from various natural plant materials. However, such procedure is unusable for practical use as brassinolide occurs in natural material in very low quantities only. E.g. in rape pollen, i.e. pollen of *Brassica napus* [Groves M.D. et all.: Nature (London) 281, 216 (1979).], its content is only 0.1x10⁻⁴ %; its content in other materials, e.g. in Chinese cabbage [Morishita T. et all.: Phytochemistry 22, 1051 (1983).], is even much lower: 0.3x10⁻⁹ %. It is possible to obtain brassinolide also synthetically what is inconvenient due to many steps of such synthesis, low yield of the synthesis and very high price of final product [e.g. Fung et all.: J. Amer. Chem. Soc. 102, 6580 (1980), Hazra B. G. et all.: Tetrahedron 50, 2523 (1994), Koreeda M. et all.: Synlett 8, 650 (1995) etc.] Therefore 24-epibrassinolide, (22R,23R,24R)-2α,3α,22,23-tetrahydroxy-24-methyl-7a-homo-7-oxa-5α-cholestan-6--one which is a structural isomer of brassinolide, differing form brassinolide only in configuration of methyl group in position 24, is the most often used in very few agricultural applications as well as in research of brassinosteroids. However, this compound is also synthetically accessible only with difficulties though improvements of its syntheses have been published (see e.g. Kohout L.: Coll. Czech. Chem. Commun. 59, 457 (1994), Brosa C. et all.: Tetr. Lett. 32, 7057 (1992) and Khripach V. A. et all.: Zh. Org. Khim. 30, 1650 (1994).].

Synthesis and utilization of some other new brassinosteroids have been described in the art [e.g. Khripach V.A. et all.: Vesti Akad. Nauk Belarusi, Ser. Khim. Nauk (3), 64 (1995), and Mori K et all.: Liebigs Ann. Chem. 815 (1988).], among them also 2α,3α,17β-trihydroxy-5α-androstan-6-one [CZ-A-97-039754, CS 252 605, Plant Growth Regulation 17(2), 121-126 (1995), Coll. Czech. Chem. Commun. 52(2), 476-486 (1987), and CZ 281 040).]. However, according to CZ A-97-039754 above given compound is used for increasing the plant growth, especially for increase of length of plants and therefore for increase of green mass. CS 252 605 predominantly describes synthesis of the compound in question without any mention of plant stage development. The paper in Plant Growth Regulation 17(2), 121-126 (1995), states that 24-epibrassinolide (which is found to be present in nature in many plants, e.g. in *Arabidopsis thaliana*) and the above mentioned compound exhibit different effects on growth of tobacco callus tissue. This paper describes its effect on growth, auxin and cytokinin content on tobacco callus tissue. Coll. Czech. Chem. Commun. 52(2), 476-486 (1987), describes synthesis of many brassinosteroids including synthesis of the above mentioned compound without any mention of plant stage development. CZ patent No. 281 040 also describes the new synthesis of several natural and synthetically prepared brassinosteroids. The document relates to improving the synthesis, decreasing of the number of synthetic steps, and increasing of the yield of structurally different brassinosteroids. The above given compound is used there only as one of several examples of starting materials for the synthesis of appropriate lactone(s). Hence, any of these documents has also nothing to do with the present application, as there is no mention of any stress decreasing/removing during plant development or even no mention about plant regulation.

The most often brassinosteroid used up to now is 24-epibrassinolide, i.e. (22R,23R,24)-2α,3α,22,23-tetrahydroxy-24-methyl-7a-homo-7-oxa-5α-cholestan-6--one. However, there is no mention in the art about use of any other synthetic brassinosteroids as compound that removes plant stress. Therefore there is a need to use as plant growth regulator removing plant stress a compound which would be very active, with the activity comparable to 24-epibrassinolide, but which would be easily accessible. Present invention solves the problem.

### Disclosure of the Invention

We have found that 2α,3α,17β-trihydroxy-5α-androstan-6-one (compound I) is very convenient active ingredient for influencing of different plant growth stage by decreasing or even removing of plant stress effect. Formulations with the compound I are made in the following way: Compound I is dissolved to concentrated solution in convenient solvent such as alcohol, e.g. methanol, ethanol, propanol or isopropanol or like, or in an inert solvent such as dimethylsutfoxid, N,N-dimethylformamid, N,N-dimethylacetamide, or like, or in their mixture. This concentrated solution is then diluted with water to particular convenient concentration, e.g. to 10⁻⁶ M solution, and this solution is applied to plants. Of course, it is advantageously possible to dissolve the active ingredient also directly in a necessary amount of water and apply directly this solution. The application can be made in any convenient way, for example with a hand sprayer, back sprayer or with any industrially produced spraying means. There is no special limitation in the choice of convenient sprayer as the active ingredient concentration is very low. For good wetting it is possible to add surfactant such as Tween, e.g. Tween 20. The solution made in this way is suitable for application to regulate the development of plant growth stages, especially by decreasing of plant stress. Term "plant stress" means e.g., but without limitation to it, lack of water/irrigation, lack of nutrients in medium in which plants growth, influence of cold, salt, pesticides, herbicides etc. etc.].

Present invention will be illustrated in detail in the following examples which are not to be taken as limitation of this invention but as its illustration only. The limitation of present invention is given only by appended claims.

### Examples

### Example 1

### Preparation of simple solution with 2α,3α,17β-trihydroxy-5α-androstan-6-one for apllication

2 ml of isopropanol are added to 1 mg of 2α,3α,17β-trihydroxy-5α-androstan-6-one. This solution is diluted with water to the appropriate concentration. Resulting solution is prepared for application.

### Example 2

### Preparation of solution with 2α,3α,17β-trihydroxy-5α-androstan-6-one with surface agent for application

2 ml of ethanol are added to 1 mg of 2α,3α,17β-trihydroxy-5α-androstan-6-one and 1 ml of Tween 20^{(R)} is added. This solution is diluted with water to the appropriate concentration. Resulting solution is prepared for application.

### Example 3

### Preparation of water solution with 2α,3α,17β-trihydroxy-5α-androstan-6-one for application

0,2 mg of 2α,3α,17β-trihydroxy-5α-androstan-6-one is dissolved in 10 L of water. This solution is ready for direct application.

### Example 4

### Preparation of complex solution with 2α,3α,17β-trihydroxy-5α-androstan-6-one for application

0,5 ml of ethanol and 0,5 ml of dimethylsulfoxid are added to 1 mg of 2α,3α,17β-trihydroxy-5α-androstan-6-one. This solution is diluted with water to the appropriate concentration. Resulting solution is prepared for application.

### Example 5

### Removing of salt stress

The application solution A is made by adding of 0,01 ml of a solution according to the example 1 to 500 ml of water. Bean plants planted in a greenhouse in the beginning of their second intemode stage (length of intemode 2 mm) are divided to 6 groups of the same size. The first and the second groups are watered with water containing 1 % solution of sodium chloride, the third and the fourth groups are planted in a green-house at 15 °C, The fifth and the sixth groups are planted under standard condition in a green-house. The second, the fourth and the sixth groups are sprayed with the application solution A. After 4 days green mass of all groups is recorded, left to dry up and again recorded.

**Table 1**

| Green and dry mass of bean plants (in % to control, i.e. group 5 = 100 %) after 4 days from application | | | |
|---|---|---|---|
| | Application | Green mass | Dry mass |
| group 1 | NaCl | 82 | 83 |
| group 2 | NaCl + solution A | 114 | 118 |
| group 3 | 15 °C | 75 | 76 |
| group 4 | 15 °C + solution A | 120 | 123 |
| group 5 | 0 | 100 | 100 |
| group 6 | 0 + solution A | 124 | 128 |

Table 1 shows that after treatment with application solution A in all cases pronounced removing of stress influence to plants occurred.

### Example 6

### Removing of salt stress

Conditions of this example are the same as in the example 5 except the evaluation of green and dry mass which were recorded after 18 days.

**Table 2**

| Green and dry mass of beans (in % to control, i.e. group 5 = 100 %) after 18 days from application | | | |
|---|---|---|---|
| | Application | Green mass | Dry mass |
| group 1 | NaCl | 79 | 80 |
| group 2 | NaCl + solution A | 110 | 111 |
| group 3 | 15 °C | 65 | 67 |
| group 4 | 15 °C + solution A | 114 | 117 |
| group 5 | 0 | 100 | 100 |
| group 6 | 0 + solution A | 119 | 120 |

Table 2 shows that after treatment with application solution A in all cases the pronounced removing of stress influence to plants occurred.

### Example 7

### Combating the effects of drought on growth of sugar root

This experiment was made on the field in year 2000 which was extremely dry year with the loss of 150 millions of US $ in agriculture production in the Czech Republic. The field (No. 1) of area 10 m² was sprayed with the solution according to example 3 (application solution C). The second field (No. 2) of the same area was sprayed with the application solution D which was prepared dissolving of 0,2 g 24-epibrassinolide in 10 L of water. The third field (No. 3) of the same area was sprayed with corresponding amount of drinking water (treatment E). After the harvest the content of sugar and mass of sugar roots were recorded. The results are given in the table 3.

**Table 3**

| Average increase (sugar beet Epos) (control (E) = 100) | | | |
|---|---|---|---|
| Parameter | Treatment | | |
| | C | D | E |
| leaf mass (fresh) | 149 | 49 | 100 |
| leaf mass (dry) | 135 | 64 | 100 |
| leaf area | 148 | 128 | 100 |
| root mass | 239 | 176 | 100 |
| chlorophyll content | 314 | 174 | 100 |
| sugar content (in roots) | 106 | 101 | 100 |

Table 3 shows that treatment with the application solution C, containing compound I, results in the increase of all values in relation to oontrol plants, which is greater than with the application solution D containing 24-epibrassinolide. Both application solutions resulted in reducing the stress caused with the extremely dry period of the year 2000.

These examples are given here only as illustration of the invention and not as its limitation as there are many other different modifications of the above given embo-. diments, which are in the spirit and range of the following claims.

## Claims

1. The use of 2α,3α,17β-trihydroxy-5α-androstan-6-one as active ingredient for plant development regulation by decreasing of a plant stress in the form of application solution which is made by dissolving active ingredients in appropriate solvent to appropriate concentration, which is then diluted with water and the application solution obtained is applied to plants.

2. The use of 2α,3α,17β-trihydroxy-5α-androstan-6-one as active ingredient for plant development regulation by decreasing of a plant stress according to the claim 1 wherein the active ingredients is dissolved in a convenient solvent, in which the active ingredients is well soluble, to a concentrated solution, which is diluted with water to the application solution immediately before application

3. The use of 2α,3α,17β-trihydroxy-5α-androstan-6-one as active ingredient for plant development regulation by decreasing of a plant stress according to the claim 2 wherein the convenient solvent is alcohol or other inert organic solvents.

4. The use of 2α,3α,17β-trihydroxy-5α-androstan-6-one as active ingredient for plant development regulation by decreasing of a plant stress according to the claim 3 wherein the alcohol used is ethanol or isopropanol.

5. The use of 2α,3α,17β-trihydroxy-5α-androstan-6-one as active ingredient for plant development regulation by decreasing of a plant stress according to the claim 3 wherein the other inert organic solvent is dimethylsulfoxide.

6. The use of 2α,3α,17β-trihydroxy-5α-androstan-6-one as active ingredient for plant development regulation by decreasing of a plant stress according to the claim 2 wherein surfactant is addded to the solution of active ingredients in convenient solution.

7. The use of 2α,3α,17β-trihydroxy-5α-androstan-6-one as active ingredient for plant development regulation by decreasing of a plant stress according to the claim 6 wherein Tween 20 is used as surfactant.

8. The use of 2α,3α,17β-trihydroxy-5α-androstan-6-one as active ingredient for plant development regulation by decreasing of a plant stress according to the claim 1 wherein the convenient solvent is water.

## Patentansprüche

1. Verwendung des 2α,3α,17β-trihydroxy-5α-androstan-6-ons als aktiver Bestandteil für die Regulierung von Pflanzenwachstum durch Senkung von Pflanzenstress in Form einer Applikationslösung, die durch Auflösen des aktiven Bestandteiles auf geeignete Konzentration in geeignetem Lösungsmittel hergestellt wird, worauf sie mit Wasser verdünnt wird, und die so entstandene Applikationslösung auf die Pflanzen appliziert wird.

2. Verwendung des 2α,3α,17β-trihydroxy-5α-androstan-6-ons als aktiver Bestandteil für die Regulierung von Pflanzenwachstum durch Senkung von Pflanzenstress nach Anspruch 1, **dadurch gekennzeichnet, daß** der aktive Bestandteil in einem geeigneten Lösungsmittel, in dem er gut lösbar ist, auf konzentrierte Lösung gelöst wird, welche dann mit Wasser zur Applikationslösung unmittelbar vor der Applikation verdünnt wird.

3. Verwendung des 2α,3α,17β-trihydroxy-5α-androstan-6-ons als aktiver Bestandteil für die Regulierung von Pflanzenwachstum durch Senkung von Pflanzenstress nach Anspruch 2, **dadurch gekennzeichnet, daß** das geeignete Lösungsmittel ein Alkohol oder ein anderes inertes organiches Lösungsmittel ist.

4. Verwendung des 2α,3α,17β-trihydroxy-5α-androstan-6-ons als aktiver Bestandteil für die Regulierung von Pflanzenwachstum durch Senkung von Pflanzenstress nach Anspruch 3, **dadurch gekennzeichnet, daß** der verwendete Alkohol Ethanol oder Isopropanol ist.

5. Verwendung des 2α,3α,17β-trihydroxy-5α-androstan-6-ons als aktiver Bestandteil für die Regulierung von Pflanzenwachstum durch Senkung von Pflanzenstress nach Anspruch 3, **dadurch gekennzeichnet, daß** das andere inerte organiche Lösungsmittel Dimethylsulfoxid ist.

6. Verwendung des 2α,3α,17β-trihydroxy-5α-androstan-6-ons als aktiver Bestandteil für die Regulierung von Pflanzenwachstum durch Senkung von Pflanzenstress nach Anspruch 2, **dadurch gekennzeichnet, daß** der Lösung des aktiven Bestandteils in geeignetem Lösungsmittel ein oberflächenaktives Mittel zugefügt wird.

7. Verwendung des 2α,3α,17β-trihydroxy-5α-androstan-6-ons als aktiver Bestandteil für die Regulierung von Pflanzenwachstum durch Senkung von Pflanzenstress nach Anspruch 6, **dadurch gekennzeichnet, daß** Tween 20 als das oberflächenaktive Mittel verwendet wird.

8. Verwendung des 2α,3α,17β-trihydroxy-5α-androstan-6-ons als aktiver Bestandteil für die Regulierung von Pflanzenwachstum durch Senkung von Pflanzenstress nach Anspruch 1, **dadurch gekennzeichnet, daß** das geeignete Lösungsmittel Wasser ist.

## Revendications

1. Usage de 2α, 3α, 17β-trihydroxy-5α-androstan-6-one en tant qu'une composante active servant à la régulation de la pousse des plantes par la diminution de leur stress sous forme de la solution d'application qui est préparée par la solution des composantes actives dans un solvant approprié à la concentration appropriée, après quoi elle est diluée d'eau et la solution d'application ainsi obtenue est appliquée sur les plantes.

2. Usage de 2α, 3α, 17β-trihydroxy-5α-androstan-6-one en tant qu'une composante active servant à la régulation de la pousse des plantes par la diminution de leur stress selon la revendication 1, **caractérisé par le fait que** les composantes actives sont dissous dans un solvant convenable, dans lequel elles sont bien soluble, à la solution concentrée qui est ensuite diluée d'eau à la solution d'application prête à l'application.

3. Usage de 2α, 3α, 17β-trihydroxy-5α-androstan-6-one en tant qu'une composante active servant à la régulation de la pousse des plantes par la diminution de leur stress selon la revendication 2, **caractérisé par le fait que** le solvant convenable est l'alcool ou d'autres solvants organiques inertes.

4. Usage de 2α, 3α, 17β-trihydroxy-5α-androstan-6-one en tant qu'une composante active servant à la régulation de la pousse des plantes par la diminution de leur stress selon la revendication 3, **caractérisé par le fait que** l'alcool appliqué est l'éthanol ou l'isopropanol.

5. Usage de 2α, 3α, 17β-trihydroxy-5α-androstan-6-one en tant qu'une composante active servant à la régulation de la pousse des plantes par la diminution de leur stress selon la revendication 3, **caractérisé par le fait que** le solvant organique inerte est le diméthylsulfoxide.

6. Usage de 2α, 3α, 17β-trihydroxy-5α-androstan-6-one en tant qu'une composante active servant à la régulation de la pousse des plantes par la diminution de leur stress selon la revendication 2, **caractérisé par le fait qu'**on ajoute un agent actif à la surface à la solution des composantes actives dans la solvant covenable.

7. Usage de 2α, 3α, 17β-trihydroxy-5α-androstan-6-one en tant qu'une composante active servant à la régulation de la pousse des plantes par la diminution de leur stress selon la revendication 6, **caractérisé par le fait que** en tant que Tween 20 on applique l'agent actif à la surface.

8. Usage de 2α, 3α, 17β-trihydroxy-5α-androstan-6-one en tant qu'une composante active servant à la régulation de la pousse des plantes par la diminution de leur stress selon la revendication 1, **caractérisé par le fait qu'**un solvant covenable est de l'eau.
